# EUROPÄISCHE PATENTSCHRIFT

(11) **EP 0 731 815 B1**
(45) Veröffentlichungstag und Bekanntmachung des Hinweises auf die Patenterteilung: **28.01.1998**
(21) Anmeldenummer: 95903297.0
(22) Anmeldetag: 28.11.1994
(51) Int. Cl.: C08F 220/12, C08F 220/32

(54) **ZUR LACKIERUNG VON AUTOMOBILKAROSSERIEN GEEIGNETE PULVERLACKE**
POWDER PAINTS FOR AUTO BODY PAINTING
PEINTURES PULVERULENTES POUR CARROSSERIES D'AUTOMOBILES

(30) Priorität: 03.12.1993 DE 4341235
(43) Veröffentlichungstag der Anmeldung: 18.09.1996
(73) Patentinhaber: BASF Lacke und Farben AG, 48165 Münster (DE)
(72) Erfinder: HILGER, Christopher, D-48151 Münster (DE); WOLTERING, Joachim, D-48145 Münster (DE); CIBURA, Klaus, D-48167 Münster (DE)
(86) Internationale Anmeldenummer: EP9403942
(87) Internationale Veröffentlichungsnummer: WO9515347

(56) Entgegenhaltungen:
- EP-A- 0 275 051
- CHEMICAL ABSTRACTS, vol. 111, no. 20, 13. November 1989, Columbus, Ohio, US; abstract no. 175915, 'MANUFACTURE OF SILOXANE-MODIFIED ACRYLIC RUBBERS.' Seite 96 ;

## Beschreibung

Die Erfindung bezieht sich auf Pulverlacke, insbesondere auf Pulverlacke, die zur Lackierung von Automobilkarosserien geeignet sind.

Pulverlacke haben den Vorteil, daß sie besonders emissionsarm appliziert werden können. Mit Pulverlacken hergestellte Lackschichten weisen nachteiligerweise Oberflächeneigenschaften, wie z.B. Verlauf, Wetterbeständigkeit, Chemikalienbeständigkeit, Kratzbeständigkeit und Unempfindlichkeit gegen Schmutz auf, die den beispielsweise bei der Decklackierung von Fahrzeugkarosserien gestellten Anforderungen nicht genügen. In der EP-A-275 051 werden Pulverlacke beschrieben, die als Bindemittel ein Polyacrylatharz enthalten, das durch Polymerisation von ethylenisch ungesättigten Monomeren in Gegenwart eines Silikonharzes hergestellt wird. Mit diesen Pulverlacken hergestellte Lackfilme sollen widerstandsfähig sein und eine gute Wetterbeständigkeit aufweisen. Die in den in der EP-A-275 051 beschriebenen Pulverlacken enthaltenen hohen Mengen an Silikonharz führen jedoch dazu, daß die Pulverlackschichten gegenüber dem Untergrund eine verschlechterte Haftung zeigen und schlecht überlackierbar sind, weil durch die Anwesenheit der hohen Menge an Silikonharz auch die Haftung zu überlackierten Lackschichten verschlechtert wird.

Außerdem werden bei der Verarbeitung und Herstellung der in der EP-A-275 051 beschriebenen Pulverlacke die zur Verarbeitung bzw. Herstellung eingesetzten Maschinen stark mit Silikonharzen verunreinigt, die schon in kleinen Mengen bei in den Maschinen nachfolgend verarbeiteten Lacken zu gravierenden Problemen (insbesondere Oberflächenstörungen in den mit den verunreinigten Lacken hergestellen Lackfilmen) führen.

Die der vorliegenden Erfindung zugrundeliegende technische Aufgabenstellung besteht in der Bereitstellung von Pulverlacken, die die oben beschriebenen Nachteile nicht bzw. nur in vermindertem Ausmaß zeigen und mit denen Lackschichten herstellbar sind, die sich durch gute Oberflächeneigenschaften auszeichnen.

Die Aufgabenstellung wird überraschenderweise durch Bereitstellung von Pulverlacken gelöst, die mindestens ein epoxidgruppenhaltiges Polyacrylatharz als Bindemittel enthalten und die dadurch gekennzeichnet sind, daß das epoxidgruppenhaltige Polyacrylatharz herstellbar ist, indem
(a) 10,00 bis 50,00, vorzugsweise 25,00 bis 40,00 Gew.-% eines ethylenisch ungesättigten Monomeren, das mindestens eine Epoxidgruppe im Molekül enthält oder einer Mischung aus solchen Monomeren,
(b) 5,00 bis 84,99, vorzugsweise 20,00 bis 64,80 Gew.-% eines aliphatischen oder cycloaliphatischen Esters der Acryl- oder Methacrylsäure oder einer Mischung aus solchen Estern
(c) 0,01 bis 4,99, vorzugsweise 0,20 bis 4,00 Gew.-% einer ethylenisch ungesättigten Verbindung, die im statistischen Mittel pro Molekül mindestens eine polymerisierbare ethylenisch ungesättigte Gruppe und mindestens zwei Struktureinheiten der allgemeinen Formel (-SiR¹R²-O-), in der R¹ und R² gleich oder verschieden sein können und einen aliphatischen oder cycloaliphatischen Rest mit 1 bis 8 C-Atomen oder einen gegebenfalls substituierten Phenylrest bedeuten oder einer Mischung aus solchen ethylenisch ungesättigten Verbindungen und
(d) 5,00 bis 84,99, vorzugsweise 10,00 bis 54,80 Gew.-% eines von (a), (b) und (c) verschiedenen ethylenisch ungesättigten Monomeren oder einer Mischung aus solchen Monomeren
zu einem epoxidgruppenhaltigen Polyacrylatharz polymerisiert werden.

Als Beispiele für ethylenisch ungesättigte Monomere, die mindestens eine Epoxidgruppe im Molekül enthalten und als Komponente (a) eingesetzt werden können, werden Glycidylacrylat, Glycidylmethacrylat und Allylglycidylether genannt.

Als Beispiele für aliphatische und cycloaliphatische Ester der Acryl- oder Methacrylsäure, die als Komponente (b) einsetzbar sind, werden aliphatische und cycloaliphatische Ester der Acryl- oder Methacrylsäure genannt, die 1 bis 20, vorzugsweise 1 bis 12 Kohlenstoffatome im Alkyl- bzw. Cycloalkylrest enthalten. Als Komponente (b) werden vorzugsweise Methylacrylat, Methylmethacrylat, Ethylacrylat, Ethylmethacrylat, Propylacrylat, Propylmethacrylat, Butylacrylat, Butylmethacrylat, 2-Ethylhexylacrylat, 2-Ethylhexylmethacrylat und Cyclohexylacrylat sowie Cyclohexylmethacrylat eingesetzt.

Als Komponente (c) können beispielsweise ethylenisch ungesättigte Polysiloxanmakromonomere eingesetzt werden, die herstellbar sind durch Umsetzung von 70 bis 99,999 Mol-% einer Verbindung (1) der allgemeinen Formel R³-Si-R⁴R⁵R⁶, in der R³ einen aliphatischen Kohlenwasserstoffrest mit 1 bis 8 C-Atomen oder einen Phenylrest bedeutet und R⁴, R⁵ und R⁶ gleich oder verschieden sein können und einen Halogenrest, einen Alkoxirest mit 1 bis 4 C-Atomen oder eine Hydroxylgruppe bedeuten, mit 30 bis 0,001 Mol-% einer Verbindung (2) der allgemeinen Formel CH₂=CR⁷-COO(CH₂)ₙ SiR⁸R⁹R¹⁰, in der R⁷ ein Wasserstoffatom oder einen Methylrest bedeutet und R⁸, R⁹ und R¹⁰ gleich oder verschieden sein können und einen Halogenrest, einen Alkoxirest mit 1 bis 4 C-Atomen, eine Hydroxylgruppe oder einen aliphatischen Kohlenwasserstoffrest mit 1 bis 8 C-Atomen bedeuten, wobei wenigstens einer der Reste R⁸, R⁹ und R¹⁰ eine Hydroxylgruppe oder eine Alkoxigruppe ist und n für eine ganze Zahl von 1 bis 6 steht.

In der Verbindung (1) sind Beispiele für Alkoxigruppen mit 1 bis 4 C-Atomen geradkettige oder verzweigte Gruppen, wie z. B. Methoxi-, Ethoxi-, Propoxi und Butoxigruppen, aliphatische Kohlenwasserstoffgruppen sind geradkettige oder verzweigte aliphatische Kohlenwasserstoffgruppen, wie Methyl, Ethyl, Propyl, Butyl, Pentyl, Hexyl, Heptyl, und Octyl. Methyl und Phenyl sind besonders bevorzugt als R₃ in der Verbindung (1). Bevorzugt als R₄, R₅ und R₆ sind Methoxi-, Ethoxi-, Propoxi-, Butoxi- und Hydroxigruppen. Beispiele für bevorzugte Verbindungen (1) sind Methyltrimethoxisilan, Phenyltrimethoxisilan, Butyltrimethoxisilan, Methyltriethoxisilan, Methyltributoxisilan, Phenyltrisilanol und Methyltrisilanol, von denen Methyltrimethoxisilan, Phenyltrimethoxisilan und Phenyltrisilanol besonders bevorzugt sind. Diese Verbindungen können allein oder in Kombination verwendet werden.

In der obigen Verbindung (2) steht R₇ für ein Wasserstoffatom oder eine Methylgruppe und R₈, R₉ und R₁₀ repräsentieren jeweils eine Hydroxigruppe, Alkoxigruppe mit 1 bis 4 Kohlenstoffatomen oder eine aliphatische Kohlenwasserstoffgruppe mit 1 bis 8 Kohlenstoffatomen; n ist eine ganze Zahl von 1 bis 6. R₈, R₉ und R₁₀ können alle gleich oder verschieden sein oder wenigstens eine dieser Gruppen kann von den anderen verschieden sein. Jedoch ist wenigstens eine dieser Gruppe eine Hydroxyl oder eine Alkoxigruppe.In der Verbindung (2) sind Beispiele für aliphatische Kohlenwasserstoffgruppen mit 1-bis 8 Kohlenstoffatomen und Alkoxigruppen mit 1 bis 4 Kohlenstoffatomen diejenigen, die für die Verbindung (1) angeführt wurden. Methoxi-, Ethoxi- und Hydroxigruppen sind besonders bevorzugt als R₈, R₉ und R₁₀ und n liegt vorzugsweise im Bereich von 2 bis 4. Beispiele für bevorzugte Verbindungen (2) sind
γ-Acryloxiethyltriethoxisilan,
γ-Methacryloxiethyltriethoxisilan,
γ-Methacryloxipropyltrimethoxisilan,
γ-Methacryloxipropyltriethoxisilan,
γ-Acryloxipropyltrimethoxisilan,
γ-Methacryloxibutyltriethoxisilan und
γ-Acryloxipropyltrisilanol.

Besonders bevorzugt unter diesen Beispielen sind
γ-Acryloxiethyltriethoxisilan,
γ-Methacryloxiethyltriethoxisilan,
γ-Methacryloxipropyltrimethoxisilan,
γ-Methacryloxipropyltriethoxisilan und
γ-Acryloxipropyltrisilanol.

Diese Verbindungen können einzeln oder in Kombination eingesetzt werden.

Die Reaktion zwischen den Verbindungen (1) und (2) wird bewerkstelligt durch die dehydratisierende Kondensation der Hydroxylgruppen, die in diesen Verbindungen enthalten sind und/oder der Hydroxylgruppen, die auf die Hydrolyse der Alkoxigruppen dieser Verbindungen zurückzuführen sind. In Abhängigkeit von den Reaktionsbedingungen beinhaltet die Umsetzung zusätzlich zu der Dehydratisierungsreaktion eine dealkoholisierende Kondensation. Falls die Verbindungen (1) oder (2) Halogenreste enthalten, wird die Reaktion zwischen (1) und (2) bewerkstelligt durch Dehydrohalogenierung.

Obwohl die Reaktion in Abwesenheit von Lösungsmittel durchgeführt werden kann, ist es wünschenswert, die Reaktion in Wasser und/oder einem organischen Lösungsmittel, in dem beide Verbindungen (1) und (2) löslich sind, durchzuführen. Beispiele für geeignete organische Lösungsmittel sind Kohlenwasserstofflösungsmittel, wie z.B. Heptan, Toluol, Xylol, Octan und Testbenzin, Esterlösungsmittel, wie z.B. Ethylacetat, n-Butylacetat, Isobutylacetat, Methylcellusolveacetat und Butylcarbitolacetat, Ketonlösungsmittel, wie z.B. Methylethylketon, Methylisobutylketon und Diisobutylketon, alkoholische Lösungsmittel, wie z.B. Ethanol, Isopropanol, n-Butanol, sec-Butanol und Isobutanol, Etherlösungsmittel, wie z.B. n-Butylether, Dioxan, Ethylenglykolmonomethylether und Ethylenglykolmonoethylether und dgl.. Diese Lösungsmittel können einzeln oder in Kombination verwendet werden.

Wenn die Verbindungen (1) und (2) in Form einer Lösung verwendet werden, beträgt die Gesamtkonzentration dieser Verbindungen in der Lösung geeigneterweise wenigstens 5 Gew.-%.

Die Verbindungen (1) und (2) werden in geeigneter Weise bei Temperaturen von 20 bis 180°C, vorzugsweise 50 bis 120°C, umgesetzt. Die Umsetzungsdauer beträgt geeigneterweise gewöhnlich ungefähr 1 bis ungefähr 40 Stunden.

Gegebenenfalls kann die Umsetzung in Anwesenheit eines Polymerisationsinhibitors durchgeführt werden. Beispiele für geeignete Inhibitoren sind Hydrochinon, Hydrochinonmonomethylether und ähnliche Chinonverbindungen.

Das Reaktionssystem der Verbindungen (1) und (2) kann Tetraalkoxisilan, Dialkyldialkoxisilan oder dgl., welche in einer Menge von bis zu ungefähr 20 Mol-%, bezogen auf das Gesamtgewicht der Verbindungen (1) und (2), eingesetzt werden, enthalten. Wenn R₄, R₅, R₆, R₈ R₉ und R₁₀ in den Verbindungen (1) und (2) alle für Hydroxylgruppen stehen, ist es wünschenswert, die Reaktion in einem organischen Lösungsmittel unter Erhitzen und Rühren zwecks dehydratisierender Kondensation durchzuführen. Wenn weiterhin wenigstens eine der Verbindungen (1) und (2) an Si gebundene Alkoxigruppen aufweist, ist es bevorzugt, vor der Kondensation eine Hydrolyse durchzuführen. Die Durchführung der Hydrolyse wird erforderlich, wenn alle Gruppen R₄, R₅, R₆, R₈, R₉ und R₁₀ Alkoxigruppen sind. Die Hydrolysereaktion und die Kondensationsreaktion können kontinuierlich in Anwesenheit von Wasser und einem Katalysator unter Erhitzen und Rühren durchgeführt werden. Die Wassermenge, die für diese Reaktion verwendet wird, liegt, obwohl sie nicht besonders begrenzt ist, vorzugsweise bei wenigstens ungefähr 0,1 Mol pro Mol Alkoxi. Bei Anwesenheit von weniger als 0,1 Mol Wasser tendieren die beiden Verbindungen dazu, weniger reaktiv zu werden. Besonders bevorzugt wird die Verwendung eines großen Wasserüberschusses. In dem Falle, in dem die Kondensationsreaktion einen Alkohol liefert, der in Wasser schwer löslich ist, dient die Verwendung einer Kombination aus Wasser und einem wasserlöslichen organischen Lösungsmittel dazu, das Reaktionssystem einheitlich zu machen. Bevorzugt für die Verwendung als wasserlösliches organisches Lösungsmittel sind die oben erwähnten alkoholischen Ester-, Ether- und Ketonlösungsmittel. Saure oder alkalische Katalysatoren können als Katalysatoren für die Hydrolysereaktion eingesetzt werden. Beispiele für geeignete saure Katalysatoren sind Salzsäure, Schwefelsäure, Phosphorsäure, Ameisensäure, Essigsäure, Propionsäure, Acrylsäure und Methacrylsäure. Beispiele für geeignete alkalische Katalysatoren sind Natriumhydroxid, Triethylamin, Ammoniak und dgl.. Es ist vorteilhaft, den Katalysator in einer Menge von ungefähr 0,0001 bis ungefähr 5 Gew.-%, vorzugsweise ungefähr 0,01 bis ungefähr 0,2 Gew.-%, bezogen auf die Gesamtmenge der Verbindungen (1) und (2), einzusetzen.

Als Komponente (c) wird vorzugsweise eine ethylenisch ungesättigte Verbindung der allgemeinen Formel (I)

CH₂=CR¹¹-CO-O-R¹²-(-SiR¹³R¹⁴-O-)ₘ-SiR¹⁵R¹⁶-R¹⁷ (I),

in der m für einen Zahlenwert zwischen 6 und 500, vorzugsweise 20 und 300 steht, R¹¹ H oder einen Alkylrest mit 1 bis 3 C-Atomen, vorzugsweise H oder einen Methylrest, R¹² einen Alkylenrest mit 1 bis 6 C-Atomen oder eine -CH₂CH(OH)CH₂-O-R¹⁸-Gruppierung bedeutet, in der R¹⁸ für einen Alkylenrest mit 1 bis 6, vorzugsweise 1 bis 3 C-Atomen steht, R¹³, R¹⁴, R¹⁵ und R¹⁶ gleich oder verschieden sein können und für einen aliphatischen oder cycloaliphatischen Rest mit 1 bis 8 C-Atomen oder einen gegebenenfalls substituierten Phenylrest, vorzugsweise für einen Methyl- oder einen Phenylrest stehen, R¹⁷ die gleiche Bedeutung wie R¹³, R¹⁴, R¹⁵ und R¹⁶ hat oder für eine -R¹²-O-CO-CR¹¹=CH₂-Gruppierung steht.

Als Komponente (c) wird ganz besonders bevorzugt eine Verbindung der allgemeinen Formel (II)

CH₂=CR¹⁸-CO-O-(CH₂)₃-(Si(CH₃)₂-O)ₙSi(CH₃)₃ (II),

in der R¹⁸ für ein H-Atom oder für einen Methylrest und n für eine Zahl zwischen 20 und 300, vorzugsweise zwischen 30 und 100 steht, eingesetzt.

Verbindungen der obigen Formeln (I) und (II) sind bekannt und können beispielsweise durch Umsetzung hydroxyfunktioneller Silane mit Acrylsäure oder Methacrylsäure oder durch Umsetzung hydroxyfunktioneller Silane mit Epichlorhydrin und anschließender Umsetzung des Reaktionsprodukts mit Acrylsäure oder Methacrylsäure erhalten werden. Verbindungen dieser Art sind im Handel erhältlich.

Als Komponente (c) können auch die in der DE-A-38 07 571 auf den Seiten 5 bis 7, die in der DE-A-37 06 095 in den Spalten 3 bis 7, die in der EP-B-358 153 auf den Seiten 3 bis 6 und die in der US-A-4 754 014 in den Spalten 5 bis 9 beschriebenen Polysiloxanmakromonomere oder Mischungen aus solchen Polysiloxanmakromonomeren eingesetzt werden.

Als Komponente (d) können beispielsweise folgende Monomere eingesetzt werden: Acrylsäureamid, Methacrylsäureamid, Styrol, α-Methylstyrol, Vinyltoluol, Acrylnitril, Methacrylnitril, Vinylchlorid, Vinylidenfluorid, Vinylacetat, Hydroxiethylacrylat, Hydroxiethylmethacrylat, Hydroxipropylacrylat, Hydroxipropylmethacrylat, Hydroxibutylacrylat und Hydroxibutylmethacrylat sowie Mischungen aus diesen Monomeren eingesetzt werden.

Die in den erfindungsgemäßen Pulverlacken enthaltenen epoxidgruppenhaltigen Polyacrylatharze sind herstellbar, indem die Komponenten (a), (b), (c) und (d) zu einem epoxidgruppenhaltigen Polyacrylatharz polymerisiert werden. Die Polymerisation erfolgt vorzugsweise in einem organischen Lösemittel bzw. in einem Gemisch aus organischen Lösungsmitteln. Die Polymerisation wird vorzugsweise bei Temperaturen von 90 bis 160°C, besonders bevorzugt bei Temperaturen von 110 bis 140°C unter Verwendung von Polymerisationsinitiatoren und ggf. Polymerisationsreglern durchgeführt.

Als Polymerisationsinitiatoren können beispielsweise organische Peroxide, wie z.B. Dibenzoylperoxid, Dicumylperoxid, Cumolhydroperoxid, Di-tert.-Butylperoxid, tert.-Butylamylperoxid und tert.-Butylhydroperoxid, Diacylperoxide, wie z.B. Diacetylperoxid und Azoverbindungen, wie z.B. Azobiscyclohexannitril und Azobisisobutyronitril eingesetzt werden. Die erfindungsgemäß eingesetzten epoxidgruppenhaltigen Polyacrylatharze sollten üblicherweise ein zahlenmittleres Molekulargewicht (gelpermeationschromatographisch unter Verwendung eines Polystyrolstandards bestimmt) von 1000 bis 15000, vorzugsweise von 1200 bis 7000, besonders bevorzugt von 1500 bis 5000 aufweisen. Wie dem Fachmann bekannt, kann das zahlenmittlere Molekulargewicht der epoxidgruppenhaltigen Polyacrylatharze beispielsweise durch die Höhe der Polymerisationstemperatur, die Auswahl und Menge des eingesetzten Polymerisationsinitiators und ggf. durch Zugabe von Polymerisationsreglern, wie z.B. Mercaptanen oder Thiocarbonsäuren, beeinflußt werden.

Die erfindungsgemäßen Pulverlacke enthalten neben den obenbeschriebenen epoxidgruppenhaltigen Polyacrylatharzen vorzugsweise noch mindestens eine Verbindung, die im statistischen Mittel pro Molekül mindestens zwei Carboxylgruppen oder mindestens eine Säureanhydridgruppe oder sowohl mindestens eine Carboxylgruppe als auch mindestens eine Säureanhydridgruppe oder eine Mischung aus solchen Verbindungen als Vernetzungsmittel. Als Beispiele für derartige Verbindungen werden Adipinsäure, Pimelinsäure, Azelainsäure, Sebazinsäure, Malonsäure, Bernsteinsäure, Glutarsäure, 1,12-Dodecandisäure, Anhydride aus diesen Säuren bzw. aus Mischungen dieser Säuren sowie Polyanhydride dieser Säuren bzw. Polyanhydride aus Mischungen dieser Säuren. Polyanhydride werden durch intermolekulare Kondensation von Dicarbonsäuren erhalten. Als Vernetzungsmittel können auch Polyanhydride eingesetzt werden, die wie in der EP-A-299 420 beschrieben mit Polyol modifiziert worden sind.

Die Menge an Vernetzungsmittel kann über einen weiten Bereich variieren und richtet sich nach der Anzahl der Epoxidgruppen im epoxidgruppenhaltigen Polyacrylatharz. Im allgemeinen wird soviel eines Vernetzungsmittels in die erfindungsgemäßen Pulverlacke eingesetzt, daß das Molverhältnis von Carboxylgruppen bzw. Anhydridgruppen zu Epoxidgruppen zwischen 0,4 bis 1,4 : 1, vorzugsweise zwischen 0,8 bis 1,2 : 1 liegt.

Die erfindungsgemäßen Pulverlacke können übliche Zusatzstoffe, wie z.B. Pigmente, Füllstoffe, Vernetzungskatalysatoren, Lichtschutzmittel und Verlaufshilfsmittel, enthalten.

Die erfindungsgemäßen Pulverlacke können hergestellt werden, indem das epoxidgruppenhaltige Polyacrylatharz zusammen mit den übrigen Pulverlackkomponenten vermischt wird, die Mischung extrudiert und das erhaltene Extrudat vermahlen wird.

Die erfindungsgemäßen Pulverlacke eignen sich insbesondere zur Lackierung von Automobilkarosserien. Sie können dabei zur Grundierung, als Füller oder als Decklack eingesetzt werden.

Die erfindungsgemäßen Pulverlacke werden vorzugsweise in Verfahren zur Herstellung von Zweischichtlackierungen auf einer Substratoberfläche, insbesondere auf einer Automobilkarosserie, bei dem
(1) ein pigmentierter Basislack auf die Substratoberfläche aufgebracht wird
(2) aus dem in Stufe (1) aufgebrachten Lack ein Polymerfilm gebildet wird
(3) auf die so erhaltene Basislackschicht ein transparenter Pulverlack aufgebracht wird, der ein epoxidgruppenhaltiges Polyacrylatharz als Bindemittel enthält und anschließend
(4) die Basislackschicht zusammen mit der transparenten Pulverlackschicht eingebrannt wird,
zur Herstellung der transparenten Pulverlackschicht eingesetzt.

Das obenbeschriebene Verfahren ist so gut bekannt, daß es hier nicht weiter erläutert werden muß. Der in Stufe (1) eingesetzte pigmentierte Basislack ist vorzugsweise ein wäßriger Lack, der vorzugsweise mindestens ein plättchenförmiges Pigment, wie z.B ein plättchenförmiges Metallpigment oder ein plättchenförmiges Perleffektpigment, insbesondere ein plättchenförmiges Aluminiumpigment enthält.

Die erfindungsgemäßen Pulverlacke können mit Hilfe aller für Pulverlacke gebräuchlichen Applikationstechniken appliziert werden. Die Pulverlacke werden vorzugsweise elektrostatisch appliziert.

In den folgenden Beispielen wird die Erfindung näher erläutert. Alle Angaben über Teile und Prozentsätze sind Gewichtsangaben, falls nicht ausdrücklich etwas anderes festgestellt wird.

### 1. Herstellung von erfindungsgemäß eingesetzten Bindemitteln

### 1.1 Bindemittel I

Zu 600 Gewichtsteilen Xylol wird innerhalb von 4 Stunden eine Mischung aus 731 Gewichtsteilen Methylmethacrylat, 260 Gewichtsteilen Glycidylmethacrylat, 182 Gewichtsteilen n-Butylacrylat, 135 Gewichtsteilen Styrol und 25 Gewichtsteilen AK5¹⁾bei 130°C gegeben. Beginnend mit der Zugabe der Monomerenmischung werden 66 Teile tert. Butylper-2-ethylhexanoat (TBPEH; Hersteller: Peroxid Chemie) innerhalb von 4,5 Stunden zugegeben. Während der Zugabe der Monomerenmischung und des Peroxids beträgt die Reaktionstemperatur 130°C. Diese Temperatur wird nach Beendigung der Zugabe des Peroxids noch für eine Stunde gehalten. Dann wird das Xylol bei vermindertem Druck entfernt, das Kunstharz auf 180°C erhitzt und aus dem Reaktionsgefäß abgelassen. Das erhaltene Polyacrylatharz weist ein Epoxidäquivalentgewicht von 765 g/mol auf.
¹⁾ Polysiloxanmakromonomer mit einer Struktur, die unter die allgemeine Formel (II) fällt; Handelsprodukt der Firma Toagosei Chemical Industries Co., Ltd.

### 1.2 Bindemittel II

Bindemittel II wird wie Bindemittel I hergestellt. Es wird jedoch eine Mischung aus 731 Gewichtsteilen Methylmethacrylat, 442 Gewichtsteilen Glycidylmethacrylat, 182 Gewichtsteilen n-Butylacrylat, 135 Gewichtsteilen Styrol und 7,5 Gewichtsteilen AK5¹⁾ eingesetzt. Das erhaltene Polyacrylatharz weist ein Epoxidäquivalentgewicht von 460 g/mol auf.

### 2. Herstellung erfindungsgemäßer Pulverlacke

### 2.1 Pulverlack I

82,76 Gewichtsteile des gemäß Punkt 1.1 hergestellten Bindemittels I werden zusammen mit 12,44 Gewichtsteilen Dodecandisäure, 2,4 Gewichtsteilen eines ersten Lichtschutzmittels (Tinuvin® 900, Hersteller: Ciba Geigy AG), 1,6 Gewichtsteilen eines zweiten Lichtschutzmittels (Tinuvin® 144, Hersteller: Ciba Geigy AG), 0,4 Gewichtsteilen Benzoin und 0,4 Gewichtsteilen eines Verlaufsmittels auf Polyacrylatharzbasis (Perenol® F40, Hersteller: Henkel KGaA) in einem Fluid Mischer (Firma Hentschel) vorgemischt. Die so erhaltene Mischung wird anschließend in einem Ko-Kneter der Firma Buss (Typ PLK 46) extrudiert, wobei die Temperatur in der Mitte des Extrusionsraums 90 - 110°C beträgt. Das Extrudat wird schnell auf Raumtemperatur abgekühlt, in einer Prall-Mühle (ACM 2 L der Firma Hosokawa MikroPul) zu einem Pulver mit einem mittleren Teilchendurchmesser von 30 - 40 µm vermahlen und durch ein Sieb mit einer Porengröße von 125 µm gesiebt.

### 2.2 Pulverlack II

Es wird wie unter Punkt 2.1 beschrieben verfahren. Anstelle von 82,76 Gewichtsteilen Bindemittel I werden jedoch 76,16 Gewichtsteile Bindemittel II und anstelle von 12,44 Gewichtsteilen Dodecandisäure werden 19,04 Gewichtsteile Dodecandisäure eingesetzt.

### 3. Herstellung von Zweischichtlackierungen des basecoat-clearcoat Typs

Auf mit handelsüblicher Elektrotauchlackierung und handelsüblichem Füller beschichtete phosphatierte Stahlbleche wird ein handelsüblicher, Polyurethan, Polyester und Melaminharz enthaltender wasserverdünnbarer, mit Aluminiumplättchen pigmentierter Basislack so appliziert, daß eine Trockenfilmdicke von 12 bis 15 µm erhalten wird. Der applizierte Basislack wird 10 Minuten bei Raumtemperatur und 10 Minuten bei 80°C getrocknet. Auf die so beschichteten Stahlbleche werden dann die gemäß Punkte 2.1 und 2.2 hergestellten Pulverklarlacke elektrostatisch so überlackiert, daß eine Filmdicke des Klarlackes von 50 bis 60 µm erhalten wird. Schließlich werden Basislack und Pulverklarlack 30 Minuten bei 160°C im Umluftofen eingebrannt. Die so erhaltenen Lackierungen weisen einen guten Verlauf und einen hohen Glanz, der auch nach 2000 h Belastung (nach VDA Prüfblattentwurf 621/430, Ausgabe Juni 1980) in einer Bewitterungsanlage (WOM-KFA) erhalten bleibt, auf. Der Metalleffekt, der mit den erfindungsgemäßen Pulverklarlacken hergestellten zweischichtigen Metalleffektlackierung ist ebenfalls gut.

## Patentansprüche

1. Pulverlacke, die mindestens ein epoxidgruppenhaltiges Polyacrylatharz als Bindemittel enthalten, dadurch gekennzeichnet, daß das epoxidgruppenhaltige Polyacrylatharz herstellbar ist, indem
(a) 10,00 bis 50,00 Gew.-% eines ethylenisch ungesättigten Monomeren, das mindestens eine Epoxidgruppe im Molekül enthält oder einer Mischung aus solchen Monomeren,
(b) 5,00 bis 84,99 Gew.-% eines aliphatischen oder cycloaliphatischen Esters der Acryl- oder Methacrylsäure oder einer Mischung aus solchen Estern
(c) 0,01 bis 4,99 Gew.-% einer ethylenisch ungesättigten Verbindung, die im statistischen Mittel pro Molekül mindestens eine polymerisierbare ethylenisch ungesättigte Gruppe und mindestens zwei Struktureinheiten der allgemeinen Formel (-SiR¹R²-O-), in der R¹ und R² gleich oder verschieden sein können und einen aliphatischen oder cycloaliphatischen Rest mit 1 bis 8 C-Atomen oder einen gegebenfalls substituierten Phenylrest bedeuten oder einer Mischung aus solchen ethylenisch ungesättigten Verbindungen und
(d) 5,00 bis 84,99 Gew.-% eines von (a), (b) und (c) verschiedenen ethylenisch ungesättigten Monomeren oder einer Mischung aus solchen Monomeren
zu einem epoxidgruppenhaltigen Polyacrylatharz polymerisiert werden.

2. Pulverlacke nach Anspruch 1, dadurch gekennzeichnet, daß als Komponente (c) eine Verbindung der allgemeinen Formel (I)
CH₂=CR¹¹-CO-O-R¹²-(-SiR¹³R¹⁴-O-)ₘ-SiR¹⁵R¹⁶-R¹⁷ (I),
in der m für einen Zahlenwert zwischen 6 und 500 steht, R¹¹ H oder einen Alkylrest mit 1 bis 3 C-Atomen, R¹² einen Alkylenrest mit 1 bis 6 C-Atomen oder eine -CH₂CH(OH)CH₂-O-R¹⁸-Gruppierung bedeutet, in der R¹⁸ für einen Alkylenrest mit 1 bis 6 C-Atomen steht, R¹³, R¹⁴, R¹⁵ und R¹⁶ gleich oder verschieden sein können und für einen aliphatischen oder cycloaliphatischen Rest mit 1 bis 8 C-Atomen oder einen gegebenenfalls substituierten Phenylrest stehen, R¹⁷ die gleiche Bedeutung wie R¹³, R¹⁴, R¹⁵ und R¹⁶ hat oder für eine -R¹²-O-CO-CR¹¹=CH₂-Gruppierung steht, oder eine Mischung aus solchen Verbindungen eingesetzt wird.

3. Pulverlacke nach Anspruch 1 oder 2, dadurch gekennzeichnet, daß als Komponente (c) eine Verbindung der allgemeinen Formel (II)
CH₂=CR¹⁸-CO-O-(CH₂)₃-(Si(CH₃)₂-O)ₙSi(CH₃)₃ (II),
in der R¹⁸ für ein H-Atom oder für einen Methylrest und n für eine Zahl zwischen 20 und 300 steht, oder eine Mischung aus solchen Verbindungen eingesetzt wird.

4. Pulverlacke nach einem der Ansprüche 1 bis 3, dadurch gekennzeichnet, daß sie neben dem epoxidgruppenhaltigen Polyacrylatharz noch mindestens eine Verbindung, die im statistischen Mittel pro Molekül mindestens zwei Carboxylgruppen oder mindestens eine Säureanhydridgruppe oder sowohl mindestens eine Carboxylgruppe als auch mindestens eine Säureanhydridgruppe enthält oder eine Mischung aus solchen Verbindungen als Vernetzungsmittel enthalten.

5. Verfahren zur Herstellung von Zweischichtlackierungen auf einer Substratoberfläche, bei dem
(1) ein pigmentierter Basislack auf die Substratoberfläche aufgebracht wird
(2) aus dem in Stufe (1) aufgebrachten Lack ein Polymerfilm gebildet wird
(3) auf die so erhaltene Basislackschicht ein transparenter Pulverlack aufgebracht wird, der ein epoxidgruppenhaltiges Polyacrylatharz als Bindemittel enthält und anschließend
(4) die Basislackschicht zusammen mit der transparenten Pulverlackschicht eingebrannt wird,
dadurch gekennzeichnet, daß in Stufe (3) des Verfahrens ein Pulverlack nach einem der Ansprüche 1 bis 4 eingesetzt wird.

6. Verwendung von Pulverlacken nach einem der Ansprüche 1 bis 4 zur Lackierung von Automobilkarosserien.

7. Verwendung von Pulverlacken nach einem der Ansprüche 1 bis 4 in einem Verfahren nach Anspruch 5 zur Herstellung der transparenten Decklackschicht von Zweischichtlackierungen.

## Claims

1. Powder coatings which contain as binder at least one epoxide group-containing polyacrylate resin, characterized in that the epoxide group-containing polyacrylate resin can be prepared by polymerizing
(a) from 10.00 to 50.00 % by weight of an ethylenically unsaturated monomer containing at least one epoxide group per molecule, or of a mixture of such monomers,
(b) from 5.00 to 84.99 % by weight of an aliphatic or cycloaliphatic ester of acrylic or methacrylic acid, or of a mixture of such esters
(c) from 0.01 to 4.99 % by weight of an ethylenically unsaturated compound which contains on average per molecule at least one polymerizable ethylenically unsaturated group and at least two structural units of the general formula (-SiR¹R²-O-), in which R¹ and R² may be identical or different and are an aliphatic or cycloaliphatic radical having from 1 to 8 C atoms or an optionally substituted phenyl radical, or of a mixture of such ethylenically unsaturated compounds, and
(d) from 5.00 to 84.99 % by weight of an ethylenically unsaturated monomer which is different from (a), (b) and (c), or of a mixture of such monomers
to give an epoxide group-containing polyacrylate resin.

2. Powder coatings according to Claim 1, characterized in that the component (c) employed is a compound of the general formula (I)
CH₂=CR¹¹-CO-O-R¹² - (-SiR¹³R¹⁴-O-)ₘ-SiR¹⁵R¹⁶-R¹⁷ (I),
in which m is a numerical value of between 6 and 500, R¹¹ is H or an alkyl radical having from 1 to 3 C atoms, R¹² is an alkylene radical having from 1 to 6 C atoms or is a -CH₂CH(OH)CH₂-O-R¹⁸-group in which R¹⁸ is an alkylene radical having from 1 to 6 C atoms, R¹³, R¹⁴, R¹⁵ and R¹⁶ may be identical or different and are an aliphatic or cycloaliphatic radical having from 1 to 8 C atoms or an optionally substituted phenyl radical, R¹⁷ has the same meaning as R¹³, R¹⁴, R¹⁵ and R¹⁶ or is an -R¹²-O-CO-CR¹¹=CH₂- group, or a mixture of such compounds.

3. Powder coatings according to Claim 1 or 2, characterized in that the component (c) employed is a compound of the general formula (II)
CH₂=CR¹⁸-CO-O-(CH₂)₃-(Si(CH₃)₂-O)ₙSi(CH₃)₃ (II),
in which R¹⁸ is an H atom or is a methyl radical and n is a number between 20 and 300, or a mixture of such compounds.

4. Powder coatings according to one of Claims 1 to 3, characterized in that they contain, in addition to the epoxide group-containing polyacrylate resin, at least one compound which contains on average per molecule at least two carboxyl groups or at least one acid anhydride group or both at least one carboxyl group and at least one acid anhydride group, or a mixture of such compounds, as crosslinking agent.

5. Process for the production of two-coat finishes on a substrate surface, in which
(1) a pigmented basecoat is applied to the substrate surface
(2) a polymer film is formed from the coating material applied in step (1)
(3) a transparent powder coating is applied to the basecoat obtained in this way, which coating contains as binder an epoxide group-containing polyacrylate resin, and subsequently
(4) the basecoat is baked together with the transparent powder coat,
characterized in that, in step (3) of the process, a powder coating according to one of Claims 1 to 4 is employed.

6. Use of powder coatings according to one of Claims 1 to 4 for the finishing of motor-vehicle bodies.

7. Use of powder coatings according to one of Claims 1 to 4 in a process according to Claim 5 for the production of the transparent topcoat of two-coat finishes.

## Revendications

1. Peintures pulvérulentes contenant au moins une résine de polyacrylate contenant des groupes époxyde, caractérisées en ce que la résine de polyacrylate contenant des groupes époxyde peut être préparée en polymérisant
(a) de 10,00 à 50,00 % en poids d'un monomère éthyléniquement insaturé qui contient au moins un groupe époxyde dans la molécule, ou d'un mélange de tels monomères,
(b) de 5,00 à 84,99 % en poids d'un ester aliphatique ou cycloaliphatique de l'acide acrylique ou méthacrylique ou d'un mélange de tels esters,
(c) de 0,01 à 4,99 % en poids d'un composé éthyléniquement insaturé qui contient en moyenne statistique par molécule au moins un groupe polymérisable éthyléniquement insaturé et au moins deux motifs structurels de formule générale (-SiR¹R²-O-), dans laquelle R¹ et R² peuvent être identiques ou différents et représentent un radical aliphatique or cycloaliphatique ayant de 1 à 8 atomes de C ou un radical phényle éventuellement substitué, ou d'un mélange de tels composés éthyléniquement insaturés et
(d) de 5,00 à 84,99 % en poids d'un monomère éthyléniquement insaturé différent de (a), (b) et (c) ou d'un mélange de tels monomères,
en une résine de polyacrylate contenant des groupes époxyde.

2. Peintures pulvérulentes selon la revendication 1, caractérisées en ce que l'on utilise en tant que composant (c), un composé de formule générale (I)
CH₂=CR¹¹-CO-O-R¹²- (SiR¹³R¹⁴-O-)ₘ-SiR¹⁵R¹⁶-R¹⁷ (I),
dans laquelle m désigne un nombre compris entre 6 et 500, R¹¹ représente H ou un radical alkyle ayant de 1 à 3 atomes de C, R¹² représente un radical alkylène ayant de 1 à 6 atomes de C ou un groupement -CH₂CH(OH)CH₂-O-R¹⁸ dans lequel R¹⁸ désigne un radical alkylène ayant de 1 à 6 atomes de C, R¹³, R¹⁴, R¹⁵ et R¹⁶ peuvent être identiques ou différents et désignent un radical aliphatique ou cycloaliphatique ayant de 1 à 8 atomes de C ou un radical phényle éventuellement substitué, R¹⁷ a la même signification que R¹³, R¹⁴, R¹⁵ et R¹⁶ ou désigne un groupement -R¹²-O-CO-CR¹¹=CH₂, ou un mélange de tels composés.

3. Peintures pulvérulentes selon la revendication 1 ou 2, caractérisées en ce que l'on utilise en tant que composé (c), un composé de formule générale (II)
CH₂=CR¹⁸-CO-O-(CH₂)₃-(Si(CH₃)₂-O)ₙSi(CH₃)₃ (II),
dans laquelle R¹⁸ désigne un atome de H ou un radical méthyle et n désigne un nombre compris entre 20 et 300, ou un mélange de tels composés.

4. Peintures pulvérulentes selon l'une quelconque des revendications 1 à 3, caractérisées en ce qu'elles contiennent également en plus de la résine de polyacrylate contenant des groupes époxyde, au moins un composé qui contient en moyenne statistique par molécule au moins deux groupes carboxyle ou au moins un groupe anhydride d'acide ou à la fois au moins un groupe carboxyle et au moins un groupe anhydride d'acide, ou un mélange de tels composés, en tant qu'agent réticulant.

5. Procédé de préparation des peintures en deux couches sur une surface de substrat, dans lequel
(1) on applique une peinture de base pigmentée sur la surface de substrat
(2) on forme un film polymère à partir de la peinture appliquée en (1)
(3) on applique sur la couche de peinture de base ainsi obtenue, une peinture pulvérulente transparente qui contient une résine de polyacrylate contenant des groupes époxyde en tant que liant, et ensuite
(4) on cuit la couche de peinture de base conjointement avec la couche de peinture pulvérulente transparente,
caractérisé en ce que l'on utilise dans l'étape (3) du procédé une peinture pulvérulente selon l'une quelconque des revendications 1 à 4.

6. Emploi de peintures pulvérulentes selon l'une quelconque des revendications 1 à 4 pour la peinture de carrosseries d'automobiles.

7. Emploi de peintures pulvérulentes selon l'une quelconque des revendications 1 à 4 dans un procédé selon la revendication 5 pour la préparation de la couche de peinture de finition transparente de peintures en deux couches.
